# EUROPÄISCHE PATENTSCHRIFT

(11) **EP 1 944 929 B1**
(45) Veröffentlichungstag und Bekanntmachung des Hinweises auf die Patenterteilung: **03.07.2013**
(21) Anmeldenummer: 08100155.4
(22) Anmeldetag: 07.01.2008
(51) Int. Cl.: H04L 12/58

(54) **Verfahren und Anordnung zur Verwaltung von Daten, sowie ein entsprechendes Computerprogramm und ein entsprechendes computerlesbares Speichermedium**
Method and system for handling files and a corresponding computer program and a corresponding computer readable storage medium
Procédé et agencement de gestion de données, ainsi que programme informatique correspondant et support de stockage lisible sur ordinateur correspondant

(30) Priorität: 12.01.2007 DE 102007002617; 19.01.2007 US 624783
(43) Veröffentlichungstag der Anmeldung: 16.07.2008
(73) Patentinhaber: Cortado AG, 10559 Berlin (DE)
(72) Erfinder: Mickeleit, Carsten, 12205, Berlin (DE)
(74) Vertreter: Reinstädler, Diane

(56) Entgegenhaltungen:
- EP-A- 1 253 761
- EP-A- 1 274 017
- US-A1- 2002 013 869
- US-B1- 6 256 666

## Beschreibung

Die Erfindung betrifft ein Verfahren und eine Anordnung zur Verwaltung von Daten sowie ein entsprechendes Computerprogramm und ein entsprechendes computerlesbares Speichermedium, welche insbesondere einsetzbar sind, um beispielsweise E-Mails unter Verwendung eines E-Mail-Push-Clients, wie sie beispielsweise unter der Bezeichnung BlackBerry-Geräte bekannt sind, in einer Ordnerstruktur auf einem Server abzulegen. Als E-Mail-Push-Client werden im folgenden Datenverarbeitungseinrichtungen bezeichnet, welche E-Mail-Push-Services nutzen können, also insbesondere mit einem E-Mail-Push-Server, z.B. einem BlackBerry-Server, zusammenwirken können.

Um beispielsweise E-Mails und/oder deren Anhänge in einem entfernten Datei-System abzulegen, ist es nach dem Stand der Technik erforderlich, diese E-Mails und/oder Anhänge in einem ersten Schritt auf das Endgerät zu laden, was mit dem Mail-Server in Verbindung steht, und erst in einem zweiten Schritt die E-Mails und/oder Anhänge von diesem Endgerät in das entfernte Datei-System zu übertragen. Ein Herunterladen auf das Endgerät ist aber insbesondere bei kleinformatigen Endgeräten, wie z.B. E-Mail-Push-Clients, auch bekannt als sogenannte BlackBerry-Geräte, aufgrund eingeschränkter Speicherkapazität nicht wünschenswert. Aber auch bei Nutzung von E-Mail-Programmen auf anderen Endgeräten ist es oft wünschenswert, E-Mails und/oder deren Anhänge direkt vom Mail-Server in einem Datei-System abzulegen.

Nachrichten-Push-Clients, insbesondere E-Mail-Push-Clients, die explizit für die Darstellung und Bearbeitung von Email-Nachrichten konzipiert wurden, können E-mail-Anhänge zwar begrenzt darstellen; sie bieten aber keine Möglichkeit diese direkt von dem mobilen Endgerät aus in Verzeichnissen auf entfernten Servern abzuspeichern, um sie zu sichern, selbst zu bearbeiten oder anderen zur Verfügung zu stellen.

Die BlackBerry-Push-Mail-Technologie ist so optimiert, dass bei Eingang einer E-mail auf dem Mailserver an das mobile BlackBerry-Gerät nur Textinformationen, und diese von der Datenmenge her auch begrenzt, automatisch übertragen werden. E-mail-Anhänge werden nicht automatisch an das Endgerät übermittelt, sondern nur Informationen über
- die Anzahl der Anhänge,
- die Dateinamen der Anhänge und
- die Dateigröße je Anhang.

Ein Zugriff auf eine angehangene Datei ist nur zur Ansicht über den "Download" des Anhangs auf das mobile BlackBerry-Endgerät möglich. Bei diesem Download handelt es sich allerdings nicht um das Herunterladen des Originalanhangs, sondern lediglich um das Herunterladen einer für die Ansicht optimierten Datei. Eine Ablage des Anhangs in einem Dateisystem ist nicht möglich. Nach dem Download ist der Anhang auf dem Weg über die entsprechende E-mail, also nur auf dem BlackBerry-Endgerät selbst, jederzeit schnell wieder der anzeigbar. Voraussetzung hierfür ist, dass die auf dem BlackBerry-Endgerät standardmäßig verfügbaren Anwendungen "Attachment Viewer" für Office-Dokumente (unterstützt *.txt, *.doc/*.dot, *.xls, *.ppt, *.pdf, *.html/*.htm, *.wpd, *.zip) und "Bildbetrachter" für gängige Bilddateien (unterstützt *.bmp, *.gif, *.jpg, *.png, *.gif) installiert und funktionsfähig sind.

Andere Lösungen, die Dateioperationen für auf einem Mail- oder BlackBerry-Server abgelegte Dateien anbieten, gestatten zwar, die auf dem Server vorliegenden Dateien in einem Verzeichnis abzuspeichern, allerdings werden die Dateien dabei stets zuerst von dem Server auf das Endgerät geladen und erst anschließend in dem Zielverzeichnis gespeichert. Das bringt verschiedene Nachteile mit sich. So wird zum einen die Kommunikationsverbindung unnötig durch das Herunterladen und anschließende Wiederversenden an das entfernte Zielverzeichnis belastet. Zum anderen muss auf dem Endgerät eine Applikation installiert sein, welche ihrerseits die heruntergeladene Datei an das Zielverzeichnis übertragen kann.

Ein Verfahren für eine Fernhandhabung von E-Mail-Anhängen ist aus der US/Patentschrift US 6,256,666 B1 bekannt. Gemäß dieser Lösung wird von einem mobilen Endgerät aus per E-Mail eine Anhangsteuernachricht (ACM) an ein Gateway für mobilen Zugriff gesendet. Das Gateway für mobilen Zugriff stellt einen Prozessor für mobile Nachrichten (MMP) bereit, der die Anhangsteuernachricht auswertet und die Anhänge gemäß den in der Anhangsteuernachricht enthaltenen Angaben handhabt, beispielsweise an einem Speicherort gemäß einem angegebenen Speicherpfad ablegt.

In der Veröffentlichung US 2002/0013869 A1 wird ein Datenausgabesystem beschrieben. Bei dieser Lösung werden E-Mail-Anhänge vor der Übertragung an ein empfangendes mobiles Endgerät entfernt und auf einem Server gespeichert. Ein Nutzer kann von dem mobilen Endgerät aus in Reaktion auf eine Prozessbestätigungs-E-Mail einen auf dem Server gespeicherten Anhang weiterleiten, löschen oder ausdrucken.

Die Aufgabe der Erfindung besteht somit darin, ein Verfahren und eine Anordnung zur Verwaltung von Daten sowie ein entsprechendes Computerprogramm und ein entsprechendes computerlesbares Speichermedium bereitzustellen, welche die Nachteile der bekannten Lösungen beheben sowie insbesondere die Belastung der Kommunikationsnetzwerke verringert.

Diese Aufgabe wird erfindungsgemäß durch die Merkmale in den Ansprüchen 1, 16, 17 und 18 gelöst. Zweckmäßige Ausgestaltungen der Erfindung sind in den Unteransprüchen enthalten.

Ein besonderer Vorteil der Erfindung besteht darin, dass bei dem erfindungsgemäßen Verfahren durch ein Endgerät veranlasst wird, Daten, insbesondere Dateien, E-Mails mit und ohne Anhängen, Nachrichten mit und ohne Anhängen, von einem entfernten Server an einen zweiten entfernten Datei-Server (File-Server; im folgenden werden Datei-Server/System und File-Server/System als Äquivalente gebraucht) zu übertragen und dort in einem Datei-System abzulegen. Die Erfindung sieht dabei vor, dass es sich bei den Daten um E-Mails oder Nachrichten handelt, die auf einem Mail-Server und/oder einem Server eines Nachrichten-Signalisierungs-Service abgelegt sind. Auf dem Endgerät ist eine Applikation installiert, welche eine Funktion zur Dateiverwaltung bereitstellt. Bei der Funktion zur Dateiverwaltung handelt es sich vorzugsweise um eine Funktion, die es erlaubt, einen Speicherort für die Datei auszuwählen ("Speichern-unter-Funktion"). In einer weiteren bevorzugten Ausführungsform ist vorgesehen, dass die "Speichern-unter-Funktion" auch eine Umbenennung der Datei ermöglicht. Durch Nutzung der "Speichern-unter-Funktion" wird an den entfernten Mail-Server, den Server eines Nachrichten-Signalisierungs-Service und/oder eine dritte Datenverarbeitungseinrichtung eine Anforderung zur Verwaltung der Daten übertragen. Eine solche Anforderung umfasst zumindest Angaben zur Art der vorzunehmenden Verwaltung. Dabei kann diese Angabe auch implizit in der Anforderung enthalten sein, beispielsweise, wenn die Art der Verwaltung vom System fest vorgegeben ist. Vorzugsweise aber werden die zu verwaltenden Dateien, die Art der Verwaltung und der Speicherort im Zielsystem durch den Nutzer des Endgeräts vorgegeben. In diesem Falle wird vorzugsweise der ausgewählte Speicherort zusammen mit der Art der Verwaltung in der Anforderung an ein Computerprogramm übertragen, wobei das Computerprogramm auf dem Mail-Server und/oder dem Server eines Nachrichten-Signalisierungs-Service und/oder einer dritten Datenverarbeitungseinrichtung installiert sein kann. Durch dieses Computerprogramm wird veranlasst, dass die Daten entsprechend der Anforderung verwaltet werden, z.B. von dem Mail-Server und/oder dem Server eines Nachrichten-Signalisierungs-Service an einen Datei-Server übertragen werden. Dabei kann vorgesehen sein, dass von den an den Datei-Server übertragen Dateien eine Kopie auf dem Mail-Server und/oder dem Server eines Nachrichten-Signalisierungs-Service erhalten bleibt (Verwaltungsfunktion "Speichern-unter") oder dass die Dateien verschoben, d.h. am Ursprungsort auf dem Mail-Server und/oder dem Server eines Nachrichten-Signalisierungs-Service gelöscht werden. Vorzugsweise werden wenigstens Teile der zwischen Mail-Server und/oder dem Server eines Nachrichten-Signalisierungs-Service und dem Datei-Server übertragenen Daten, insbesondere die zu verwaltenden Daten oder Teile davon, wenigstens auf einzelnen Abschnitten der Übertragungsstrecken in komprimierter und/oder verschlüsselter Form übertragen.

Der Unterschied zwischen Datei-System und Mail-System besteht darin, dass ein Mail-System zum Zugang stets proprietäre Funktionen bereitstellt. Diese proprietären Funktionen liegen über den Funktionen des jeweiligen Betriebssystems. Der Zugriff auf Dateien, die in einem Mail-System abgelegt sind, ist über Betriebssystemfunktionen nicht möglich. Im Gegensatz dazu handelt es sich bei einem Datei-System ein Ordnungs- und Zugriffssystem für Daten, die auf einem Computer abgelegt sind. Die Zugriffsfunktionen für Datei-Systeme sind Bestandteil des Betriebssystems.

Der Vorgang zur Verwaltung von Daten wird vom Nutzer des Endgeräts angestoßen, aber auf anderen Datenverarbeitungseinrichtungen ausgeführt. Insbesondere fließen die zu verwaltenden Daten nicht über das Endgerät.

Der Datei-Server (= File-Server) ist dabei unabhängig vom System des Mail-Servers oder des Servers eines Nachrichten-Signalisierungs-Service, kann sich dabei aber durchaus auf der gleichen Datenverarbeitungseinrichtung wie der Mail-Server oder der Server eines Nachrichten-Signalisierungs-Service befinden.

Auf dem File-Server werden die Daten erfindungsgemäß in einem Verzeichnis eines File-Systems abgelegt, wo auf sie über entfernt installierte Dateiverwaltungsprogramme zugegriffen werden kann. Dieser Zugriff kann beispielsweise über FTP (File Transfer Protocol), SCP (Secure Copy) mittels SSH (Secure Shell) o.dgl. erfolgen. Dies hat den Vorteil, dass diese Daten nunmehr für die weitere Nutzung auch von mehreren Nutzern bereitstehen.

Als vorteilhaft erweist es sich auch, als Endgerät ein mobiles Endgerät, wie z.B. ein PDA (Personal Digital Assistant), ein Mobiltelefon, ein Blackberry-Endgerät o.dgl., einzusetzen, da dann bei Einsatz der Erfindung die oftmals eingeschränkten Speichermöglichkeiten dieser Endgeräte geschont werden, da erfindungsgemäß die zu verwaltenden Daten nicht auf das Endgerät geladen werden.

In einer bevorzugten Ausführungsform handelt es sich bei dem Nachrichten-Signalisierungs-Service um einen e-Mail-Push-Service. Deshalb ist in einem solchen Fall vorgesehen, dass als Endgerät ein Endgerät genutzt wird, welches mit dem Server eines Nachrichten-Signalisierungs-Service zusammenwirkt. Dies kann beispielsweise ein BlackBerry-Endgerät sein.

Bei den Applikationen, die auf dem Endgerät installiert sind, kann es sich beispielsweise um
- ein E-Mail-Programm (E-Mail-Client),
- einen Informationsmanager, wie z.B. Outlook, oder
- eine Funktionalität, welche ein Zusammenwirken mit dem Server eines Nachrichten-Signalisierungs-Service ermöglicht,(z.B. Kommunikationsprogramme, die auf einem BlackBerry-Endgerät installiert sind, wie beispielsweise das BlackBerry-eigene Mailprogramm)
handeln. Vorzugsweise ist die Funktion zur Datenverwaltung in diese Applikationen integriert und nutzt wenigstens teilweise die von dem Mail-Server und/oder dem Server eines Nachrichten-Signalisierungs-Service bereitgestellte Architektur, d.h. insbesondere den Server eines Nachrichten-Signalisierungs-Service und dessen Kommunikation mit dem Client und dem Mailserver.

Die Funktion zur Datenverwaltung kann dabei innerhalb der Applikation in Form eines Buttons oder Menuepunktes angeboten werden.

Wie erwähnt können die Angaben zur Verwaltung der Daten fest vorgegeben sein, so dass bei Nutzung der Funktion zur Datenverwaltung diese voreingestellten Parameter, wie etwa Art der Verwaltung (Kopieren, Verschieben, Format der abgespeicherten Daten, welches ggf. eine Formatwandlung einschließt, o.dgl.), der neue Speicherort o.ä. angewendet werden. Ein besonderer Vorteil von vorgegebenen Parametern besteht z.B. darin, dass der Ziel-Server von dem Endgerät selbst nicht erreichbar sein muss; es reicht, wenn er von dem Mail-Server und/oder dem Server eines Nachrichten-Signalisierungs-Service aus erreichbar ist.

Besonders vorteilhaft ist jedoch, wenn zumindest ein Teil der Parameter durch den Nutzer des Endgeräts gewählt werden können.

Eine weitere bevorzugte Ausführungsform der Erfindung sieht vor, dass die Anforderung zur Verwaltung von Daten über eine drahtlose Kommunikationsverbindung gesendet wird. Hierbei kann beispielsweise ein Mobilfunktechnologie eingesetzt werden, wie z.B.
- Global System for Mobile Communications (GSM),
- General Packet Radio Service (GPRS),
- Code Division Multiple Access (CDMA) oder
- Universal Mobile Telecommunications System (UMTS).

Wenn Daten verwaltet werden sollen, die sich auf einem Server eines Nachrichten-Signalisierungs-Service befinden, wird in einer bevorzugten Ausführungsform der Erfindung auch für die Übertragung der Anforderung zur Datenverwaltung vom Endgerät an den Server eines Nachrichten-Signalisierungs-Service eine von dem Nachrichten-Signalisierungs-Service nutzbare Kommunikationsverbindung genutzt. Vorzugsweise ist vorgesehen, hierfür einen Kanal des Mobile Data Service (MDS) zu nutzen.

Die Daten können von Mail-Server und/oder Server eines Nachrichten-Signalisierungs-Service direkt, d.h. ohne über eine dritte Datenverarbeitungseinrichtung an das Zielsystem, z.B. ein File-Server, übertragen werden. Es kann sich jedoch auch erforderlich machen, dass die Daten erst von Mail-Server und/oder Server eines Nachrichten-Signalisierungs-Service an mindestens eine dritte Datenverarbeitungseinrichtung und anschließend an das Zielsystem übertragen werden. Dabei ist jedoch erfindungsgemäß vorgesehen, dass das Endgerät, welches die Anforderung zur Verwaltung der Daten sendet, nicht als dritte Datenverarbeitungseinrichtung angesehen wird. Es ist in diesem Falle also vorgesehen, dass die Daten von dem Mail-Server und/oder dem Server eines Nachrichten-Signalisierungs-Service über mindestens eine dritte Datenverarbeitungseinrichtung, mit Ausnahme des Endgeräts, an den File-Server übertragen werden.

Für die Übertragung der zu verwaltenden Dateien an das Zielsystem kann wenigstens auf einzelnen Abschnitten des Übertragungsweges als E-Mail oder über ftp erfolgen. Der Fachmann wird in Abhängigkeit der Situation auch andere Übertragungsarten nutzen.

Bei den auf dem Mail-Server und/oder dem Server eines Nachrichten-Signalisierungs-Service abgelegten Daten kann es sich wie erwähnt um e-Mails oder Nachrichten mit oder ohne Anhang handeln. Dabei kann es sich bei den Nachrichten wiederum
- um mittels Short Message Service (SMS) versandte Nachrichten oder
- um mittels Multimedia Message Service (MMS) versandte Nachrichten
handeln.

Die zu verwaltenden Daten können in verschiedener Weise behandelt werden. So können die Daten beispielsweise
- als E-Mail mit oder ohne Anhang,
- als Nachricht mit oder ohne Anhang oder
- als von E-Mail oder Nachricht getrennten Anhängen in dem entfernten File-System gespeichert werden.

Bei dem erfindungsgemäßen Verfahren läuft somit auf einem Endgerät eine Anwendung, welche dem Nutzer Informationen und Dokumente anzeigt, die sich auf einer zweiten in einem Computernetzwerk befindlichen Datenverarbeitungseinrichtung, einem Mail-Server oder einem Server eines Nachrichten-Signalisierungs-Service, befinden. Dem Anwender wird im Rahmen dieser Anwendung eine Funktion angeboten, um diese Informationen oder Dokumente auf dem Mail-Server, dem Server eines Nachrichten-Signalisierungs-Service oder einem anderen Zielsystem im Computernetzwerk in einer Ordnerstruktur abzulegen.

Die auf dem Endgerät angezeigten Informationen und Dokumente können vollständig, als Bild oder textbasierte Vorschau oder rein als Referenz in der Anwendung vorhanden sind. Es werden jedoch anstelle der auf dem Endgerät zur Anzeige verwendeten Informationen und Dokumente erfindungsgemäß die korrespondierenden Dokumente auf dem Mail-Server oder dem Server eines Nachrichten-Signalisierungs-Service in der ausgewählten Ordnerstruktur des Zielsystems ablegt.

Alternativ oder zusätzlich zum Ablegen der Information und Dokumente in der Ordnerstruktur des Zielsystems kann auch das Ablegen in dem ersten Endgerät ermöglicht werden.

Eine erfindungsgemäße Anordnung zum Verwalten von Daten ist dadurch ausgezeichnet, dass sie
- mindestens ein Endgerät, auf dem eine Applikation mit mindestens einer Funktion zur Datenverwaltung installiert ist,
- mindestens einen Mail-Server und/oder
- mindestens einen Server eines Nachrichten-Signalisierungs-Service
umfasst, wobei Mail-Server und/oder mindestens einen Server eines Nachrichten-Signalisierungs-Service in einem Computernetz, einem Intranet oder dem Internet oder einer Kombination aus diesen angeordnet sein können.
Erfindungsgemäß sind die Daten als E-Mail oder Nachrichten auf einem Mail-Server und/oder einem Server eines Nachrichten-Signalisierungs-Service abgelegt, und die Anordnung ist derart eingerichtet, dass ein Verwalten von Daten ermöglicht wird, indem von dem Endgerät aus durch Nutzung der Funktion zur Datenverwaltung eine Anforderung zur Verwaltung von Daten an den Mail-Server und/oder den Server eines Nachrichten-Signalisierungs-Service gesendet, Daten gemäß der Anforderung von dem Mail-Server und/ oder dem Server eines Nachrichten-Signalisierungs-Service an einen File-Server übertragen und dort in einem File-System abgelegt werden, wobei die abgelegten Daten für Zugriffe aus einem Dateiverwaltungsprogramm erreichbar sind.

Ein Computerprogramm zum Verwalten von Daten ermöglicht es einer Datenverarbeitungseinrichtung, nachdem es in den Speicher der Datenverarbeitungseinrichtung geladen worden ist, ein Verfahren zum Verwalten von Daten auszuführen, wobei die Daten als E-Mail oder Nachrichten auf einem Mail-Server und/oder einem Server eines Nachrichten-Signalisierungs-Service abgelegt sind, auf einem Endgerät mindestens eine Applikation mit mindestens einer Funktion zur Datenverwaltung installiert ist, von dem Endgerät aus durch Nutzung der Funktion zur Datenverwaltung eine Anforderung zur Verwaltung von Daten an den Mail-Server und/oder den Server eines Nachrichten-Signalisierungs-Service gesendet, Daten gemäß der Anforderung von dem Mail-Server und/oder dem Server eines Nachrichten-Signalisierungs-Service an einen File-Server übertragen und dort in einem File-System abgelegt werden, wobei die abgelegten Daten für Zugriffe aus einem Dateiverwaltungsprogramm erreichbar sind.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 17 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zum Verwalten von Daten durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zum Verwalten von Daten durchzuführen, wobei die Daten als E-Mail oder Nachrichten auf einem Mail-Server und/oder einem Server eines Nachrichten-Signalisierungs-Service abgelegt sind, auf einem Endgerät mindestens eine Applikation mit mindestens einer Funktion zur Datenverwaltung installiert ist, von dem Endgerät aus durch Nutzung der Funktion zur Datenverwaltung eine Anforderung zur Verwaltung von Daten an den Mail-Server und/oder den Server eines Nachrichten-Signalisierungs-Service gesendet, Daten gemäß der Anforderung von dem Mail-Server und/oder dem Server eines Nachrichten-Signalisierungs-Service an einen File-Server übertragen und dort in einem File-System abgelegt werden, wobei die abgelegten Daten für Zugriffe aus einem Dateiverwaltungsprogramm erreichbar sind.

Die Erfindung betrifft somit ein Verfahren, das das Speichern z.B. von E-mail-Nachrichten und Anhängen von E-mail-Nachrichten, die auf einem Endgerät, insbesondere einem mobilen Endgerät wie beispielsweise einem BlackBerry-Gerät empfangen werden, auf ein entferntes Verzeichnis ermöglicht, ohne diese E-mail-Nachrichten und Anhänge vorher auf das Endgerät herunterzuladen, und ungeachtet des Dateityps und der Lesbarkeit der Datei auf dem (mobilen) Endgerät.

Das entfernte Verzeichnis befindet sich auf einem separaten und dedizierten Server, der vom Mail-Server und/oder den Server eines Nachrichten-Signalisierungs-Service (z.B. einem BlackBerry Enterprise Server) aus erreichbar ist.

Die Erfindung stellt eine "Speichern-unter"-Funktion bereit, die in einer bevorzugten Ausführungsform in eine Applikation integriert ist. Diese Applikation kann z.B. das BlackBerry-eigene Mailprogramm sein.

Die vorliegende Erfindung der "Speichern-unter"-Funktion ermöglicht den Zugriff direkt von BlackBerry-Geräten - unter Nutzung der bestehenden Blackberry-Enterprise-Server-Architektur - auf ein entferntes Verzeichnis, sowie die Möglichkeit, eine E-mail, Nachricht oder einen Anhang zu einer E-mail oder Nachricht in diesem Verzeichnis abzuspeichern.

Die Erfindung wird nachfolgend unter Bezugnahme auf die Figuren der Zeichnungen an einem Ausführungsbeispiel näher erläutert. Es zeigt:

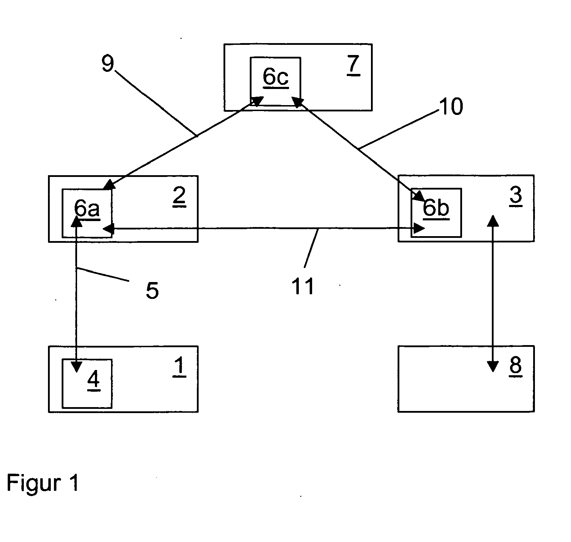

- Figur 1: beispielhafte Architektur für den Einsatz des erfindungsgemäßen Datenverwaltungsverfahrens.

Im folgenden soll die Erfindung speziell für den Einsatz in BlackBerry-Geräten 1 näher beschrieben werden. Die Erfindung ist aber nicht auf BlackBerry-Geräte 1 eingeschränkt, sondern vielmehr auch für andere Nachrichten-Push-Cients, wie z.B. Symbian-Handies oder Notebooks, nutzbar. So ist es beispielsweise auch für andere mobile Devices, einschließlich PDAs oder Notebooks sinnvoll, Dateien unter Nutzung der Erfindung zu verwalten. So hat man durch die Erfindung beispielsweise die Möglichkeit, wenn man sein Outlook unterwegs synchronisiert, auch Emails und Anhänge unproblematisch entfernt auf einem Zielsystem 3 abzulegen.

Durch die Erfindung wird ein Verfahren und eine Anordnung bereitgestellt, die es ermöglicht, über ein BlackBerry-Endgerät 1, E-Mail-Anhänge und E-Mail-Texte zu verwalten. Als spezielles Ausführungsbeispiel wird hier das Ablegen von Dateien auf einem Ziel-Server 3 bzw. die Funktion "Speichern-unter" näher erläutert, wodurch die Erfindung keinesfalls auf diese Funktionen zur Dateiverwaltung eingeschränkt werden soll. Auf dem BlackBerry-Endgerät 1 wird hierzu erfindungsgemäße ein Computerprogramm-Modul, im folgenden Client-Modul 4 genannt, zur Verfügung gestellt, welche bei Aufruf einer Funktion zur Dateiverwaltung die Kommunikation und den Datentransfer zwischen Client-Modul 4 und einem weiteren Computerprogramm, welches die Datenverwaltung steuert, ermöglicht. Dieses weitere Computerprogramm kann dabei modular aufgebaut sein. Die Module 6a, 6b, 6c können dabei auf dem Mail-Server, dem Server 2 eines Nachrichten-Signalisierungs-Service, dem Ziel-Server 3 und/oder einer dritten Datenverarbeitungseinrichtung 7 installiert sein. So sieht zum Beispiel eine Ausführungsform vor, durch das Client-Modul 4 dem Programm-Modul 6a auf dem BlackBerry-Server 2 über eine erste Kommunikationsverbindung 5 Informationen zur Datenverwaltung sendet, und das Programm-Modul 6a auf dem BlackBerry-Server 2 wiederum veranlasst, dass die entsprechenden Daten (immer erst) über eine zweite Kommunikationsverbindung 9 an das Programm-Modul 6c auf der dritten Datenverarbeitungseinrichtung 7 gesendet werden. Das Programm-Modul 6c auf der dritten Datenverarbeitungseinrichtung 7 bereitet anschließend die Daten gemäß den Nutzervorgaben vor und sendet die so vorbereiteten Daten über eine dritte Kommunikationsverbindung 10 an den Ziel-Server 3. Die Vorbereitung der Daten kann dabei darin bestehen, dass der Anhang einer Mail von der Mail getrennt wird. Dadurch wird das nur eingeschränkt zugängliche Format einer E-Mail in ein allgemein zugängliches Dateiformat (*.doc, *.pdf, *.pgp, *.jpg o.dgl.) gewandelt.

In einer Ausführungsform, bei der systemseitig ein Verzeichnis in einem Ziel-System 3 vorgegeben wird, in dem die Dateien abgespeichert werden, befindet sich vorzugsweise ein Programm-Modul 6b auf diesem Ziel-System 3, welches diese Vorbereitungen durchführt. In diesem Fall werden die Daten über eine weitere Kommunikationsverbindung 11 an das Ziel-System 3 gesendet.

Das Speichern von Anhängen in einem entfernten Verzeichnis direkt von einem BlackBerry-Gerät 1 wird ermöglicht, indem auf dem BlackBerry-Gerät 1 das Client-Modul 4 installiert wird.

Bei Empfang einer E-mail wird über das BlackBerry-Menü, welches über die graphische Benutzeroberfläche des BlackBerry-Geräts 1 bereitgestellt wird, eine Option "Speichern unter" zur Verfügung gestellt, mit der sich entweder der E-mail-Text (als *.txt-Datei) oder ein Anhang speichern lassen. Der Benutzer legt das zu speichernde Objekt (E-mail-Text oder Anhang) nach Auswahl der "Speichern unter"-Option fest. Dann wird der Speicherzielort durch den Nutzer auf wie gewohnt festgelegt. In einem speziellen Ausführungsbeispiel muss der Speicherort nicht ausgewählt werden, sondern die ausgewählten Dateien (E-mail-Text oder E-mail-Anhang) werden in ein systemseitig vorgegebenes Verzeichnis gespeichert, das jedem Benutzer auf dem Ziel-Server 3 automatisch zugewiesen ist.

Der Vorgang des Speicherns des gewählten Objektes stellt sich dabei wie folgt dar: nach Auswahl des zu speichernden Objekts und gegebenenfalls einer Bestätigung wird - für den Benutzer nicht wahrnehmbar - die entsprechende E-mail im Hintergrund durch den BlackBerry-Server 2 über eine Kommunikationsverbindung 11 an eine Softwarekomponente 6b auf dem Ziel-Server 3 gesendet, die den Anhang löst, bzw. veranlasst, dass aus dem E-mail-Text eine Datei, beispielsweise eine *.txt-Datei, erzeugt wird und diese, bzw. den E-mail-Anhang, im gewählten oder vorgegebenen Benutzerverzeichnis ablegt.

Das entfernte, nutzerdefinierte oder systemseitig für jeden Nutzer vorgegebene, Verzeichnis ist dabei ein auf dem entfernten Ziel-Server 3 verfügbares Verzeichnis, auf das zum einen über das auf dem BlackBerry-Gerät 1 installierte Client-Modul 4 zugegriffen werden kann. Zum anderen ist es dem Benutzer auch möglich, über einen Webbrowser und mit Autorisierung durch Login (Benutzername/Passwort) von jedem beliebigen externen Computer 8 aus auf dieses Verzeichnis zuzugreifen und die Datei auf die lokale Festplatte eines externen Computers 8 zu speichern, also herunterzuladen.

Die erfindungsgemäße "Speichern-unter"-Option für BlackBerry-Geräte 1 ermöglicht demnach:
- Das Speichern von E-mails oder E-mail-Anhängen, die mit einem mobilen BlackBerry-Endgerät 1 empfangen werden. Bei Anhängen bedeutet dies das Speichern, ohne die Datei vorher auf das Endgerät laden zu müssen.
- Das Speichern von Dateien im Originalformat, also auch in Formaten, die im Attachment Viewer eines BlackBerrys 1 nicht angezeigt werden können.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

### Bezugszeichenliste

- 1: BlackBerry-Gerät
- 2: Server eines Nachrichten-Signalisierungs-Service, BlackBerry-Server
- 3: Ziel-Server
- 4: Client-Modul
- 5: Kommunikationsverbindung
- 6a, 6b, 6c: Programm-Modul
- 7: dritte Datenverarbeitungseinrichtung
- 8: externer Computer
- 9: Kommunikationsverbindung
- 10: Kommunikationsverbindung
- 11: Kommunikationsverbindung

## Patentansprüche

1. Verfahren zum Verwalten von Daten, wobei die Daten als E-Mail oder Nachrichten oder Anhang einer E-Mail oder Nachricht auf einem Mail-Server und/oder einem Server eines Nachrichten-Signalisierungs-Service abgelegt sind,
auf einem Endgerät mindestens eine Applikation mit mindestens einer Funktion zur Datenverwaltung installiert ist, wobei die Funktion zur Datenverwaltung als ein in die Applikation integrierter Button oder Menüpunkt einer "Speichern-unter"-Funktion realisiert ist,
von dem Endgerät aus durch Nutzung des Buttons oder Menüpunkts eine Anforderung zur Verwaltung der Daten an ein Computerprogramm gesendet,
die Daten gemäß der Anforderung von dem Mail-Server und/oder dem Server eines Nachrichten-Signalisierungs-Service an einen Datei-Server übertragen und
dort als Datei an einem Speicherort in einem Datei-System abgelegt werden,
wobei
die Funktion zur Datenverwaltung zur Auswahl des Speicherorts von dem Endgerät aus einen Zugriff auf ein Verzeichnis in dem Datei-System erlaubt.

2. Verfahren nach Anspruch 1,
**dadurch gekennzeichnet, dass**
es sich bei dem Endgerät um ein mobiles Endgerät handelt.

3. Verfahren nach Anspruch 1 oder 2,
**dadurch gekennzeichnet, dass**
es sich bei dem Endgerät um ein Endgerät handelt, welches ein Zusammenwirken mit dem Server eines Nachrichten-Signalisierungs-Service ermöglicht.

4. Verfahren nach einem der voranstehenden Ansprüche,
**dadurch gekennzeichnet, dass**
der Speicherort durch Nutzereingabe in das Endgerät vorgegeben wird.

5. Verfahren nach einem der voranstehenden Ansprüche,
**dadurch gekennzeichnet, dass**
es sich bei der Applikation um
- ein E-Mail-Programm,
- einen Informationsmanager oder
- ein Programm des Endgerät, welches ein Zusammenwirken mit dem Server eines Nachrichten-Signalisierungs-Service ermöglicht,
handelt.

6. Verfahren nach einem der voranstehenden Ansprüche,
**dadurch gekennzeichnet dass**,
es sich bei dem Nachrichten-Signalisierungs-Service um einen e-Mail-Push-Service handelt.

7. Verfahren nach einem der voranstehenden Ansprüche,
**dadurch gekennzeichnet, dass**
es sich um e-Mails mit oder ohne e-Mail-Anhang handelt.

8. Verfahren nach einem der voranstehenden Ansprüche,
**dadurch gekennzeichnet, dass**
es sich bei den Nachrichten
- um mittels Short Message Service (SMS) versandte Nachrichten oder
- um mittels Multimedia Message Service (MMS) versandte Nachrichten
handelt.

9. Verfahren nach einem der voranstehenden Ansprüche,
**dadurch gekennzeichnet, dass**
die Anforderung zur Verwaltung von Daten über eine drahtlose Kommunikationsverbindung gesendet wird.

10. Verfahren nach Anspruch 9,
**dadurch gekennzeichnet, dass**
zur Übertragung der Anforderung zur Verwaltung von Daten eine Mobilfunktechnologie genutzt wird.

11. Verfahren nach Anspruch 10,
**dadurch gekennzeichnet, dass**
als Mobilfunktechnologie
- Global System for Mobile Communications (GSM),
- General Packet Radio Service (GPRS),
- Code Division Multiple Access (CDMA) oder
- Universal Mobile Telecommunications System (UMTS)
genutzt wird.

12. Verfahren nach einem der voranstehenden Ansprüche,
**dadurch gekennzeichnet, dass**
Daten zwischen dem Server eines Nachrichten-Signalisierungs-Service und dem Endgerät über eine für den Nachrichten-Signalisierungs-Service nutzbare Kommunikationsverbindung übertragen werden.

13. Verfahren nach Anspruch 12,
**dadurch gekennzeichnet, dass**
für die Übertragung von Daten zwischen dem Server eines Nachrichten-Signalisierungs-Service und dem Endgerät der Mobile Data Service (MDS) genutzt wird.

14. Verfahren nach einem der voranstehenden Ansprüche,
**dadurch gekennzeichnet, dass**
es sich bei den abgelegten Daten
- um E-Mails mit oder ohne Anhang,
- um Nachrichten mit oder ohne Anhang oder
- um von E-Mail oder Nachricht getrennten Anhängen
handelt.

15. Verfahren nach einem der voranstehenden Ansprüche,
**dadurch gekennzeichnet, dass**
zu verwaltende Daten zumindest auf einzelnen Abschnitten des Übertragungsweges als E-Mail oder über ftp an den Datei-Server übertragen werden.

16. Anordnung zum Verwalten von Daten, umfassend
- mindestens ein Endgerät, auf dem eine Applikation mit mindestens einer Funktion zur Datenverwaltung installiert ist, wobei die Funktion zur Datenverwaltung als ein in die Applikation integrierter Button oder Menüpunkt einer "Speichern-unter"-Funktion realisiert ist und wobei die Funktion zur Datenverwaltung zur Auswahl eines Speicherorts für die Daten von dem Endgerät aus einen Zugriff auf ein Verzeichnis in dem Datei-System erlaubt,
- mindestens einen Mail-Server und/oder
- mindestens einen Server eines Nachrichten-Signalisierungs-Service,
wobei die Daten als E-Mail oder Nachrichten oder Anhang einer E-Mail oder Nachricht auf dem Mail-Server und/oder dem Server eines Nachrichten-Signalisierungs-Service abgelegt sind, und die Anordnung derart eingerichtet ist, dass ein Verwalten von Daten ermöglicht wird, indem von dem Endgerät aus durch Nutzung des Buttons oder Menüpunkts eine Anforderung zur Verwaltung der Daten an ein Computerprogramm gesendet,
die Daten gemäß der Anforderung von dem Mail-Server und/oder dem Server eines Nachrichten-Signalisierungs-Service an einen Datei-Server übertragen und
dort als Datei an dem Speicherort in einem Datei-System abgelegt werden.

17. Computerprogramm, das es einem Computer ermöglicht, nachdem es in den Speicher des Computers geladen worden ist, ein Verfahren zum Verwalten von Daten durchzuführen, wobei die Daten als E-Mail oder Nachrichten oder Anhang einer E-Mail oder Nachricht auf einem Mail-Server und/oder einem Server eines Nachrichten-Signalisierungs-Service abgelegt sind, auf einem Endgerät mindestens eine Applikation mit mindestens einer Funktion zur Datenverwaltung installiert ist, wobei die Funktion zur Datenverwaltung als ein in die Applikation integrierter Button oder Menüpunkt einer "Speichern-unter"-Funktion realisiert ist und wobei die Funktion zur Datenverwaltung zur Auswahl eines Speicherorts für die Daten von dem Endgerät aus einen Zugriff auf ein Verzeichnis in dem Datei-System erlaubt,
von dem Endgerät aus durch Nutzung des Buttons oder Menüpunkts eine Anforderung zur Verwaltung der Daten an ein Computerprogramm gesendet,
die Daten gemäß der Anforderung von dem Mail-Server und/oder dem Server eines Nachrichten-Signalisierungs-Service an einen Datei-Server übertragen und
dort als Datei an dem Speicherort in einem Datei-System abgelegt werden.

18. Computerlesbares Speichermedium, auf dem ein Programm gespeichert ist, das es einem Computer ermöglicht, nachdem es in den Speicher des Computers geladen worden ist, ein Verfahren zum Verwalten von Daten durchzuführen, wobei die Daten als E-Mail oder Nachrichten oder Anhang einer E-Mail oder Nachricht auf einem Mail-Server und/oder einem Server eines Nachrichten-Signalisierungs-Service abgelegt sind,
auf einem Endgerät mindestens eine Applikation mit mindestens einer Funktion zur Datenverwaltung installiert ist, wobei die Funktion zur Datenverwaltung als ein in die Applikation integrierter Button oder Menüpunkt einer "Speichern-unter"-Funktion realisiert ist und wobei die Funktion zur Datenverwaltung zur Auswahl eines Speicherorts für die Daten von dem Endgerät aus einen Zugriff auf ein Verzeichnis in dem Datei-System erlaubt,
von dem Endgerät aus durch Nutzung des Buttons oder Menüpunkts eine Anforderung zur Verwaltung der Daten an ein Computerprogramm gesendet,
die Daten gemäß der Anforderung von dem Mail-Server und/oder dem Server eines Nachrichten-Signalisierungs-Service an einen Datei-Server übertragen und
dort als Datei an dem Speicherort in einem Datei-System abgelegt werden.

19. Verfahren, bei dem ein Computerprogramm nach Anspruch 17 aus einem elektronischen Datennetz, wie beispielsweise aus dem Internet, auf eine an das Datennetz angeschlossene Datenverarbeitungseinrichtung heruntergeladen wird.

## Claims

1. A method for managing data, wherein the data are stored as an e-mail or as messages or as an attachment to an e-mail or message on a mail server and/or a server of a message signalling service,
at least one application with at least one data management function is installed on a terminal, wherein the data management function is realized as a button or a menu item of a "Save As" function integrated in the application,
a data management request is sent to a computer program from the terminal using the button or menu item,
the data according to the request are transferred from the mail server and/or the server of a message signalling service to a file server and
stored there as a file at a storage location in a file system,
wherein
the data management function allows access from the terminal to a directory in the file system for selection of the storage location.

2. The method according to claim 1,
**characterized in that**
the terminal is a mobile terminal.

3. The method according to claim 1 or 2,
**characterized in that**
the terminal is a terminal which allows interaction with the server of a message signalling service.

4. The method according to one of the preceding claims,
**characterized in that**
the storage location is specified by user input into the terminal.

5. The method according to one of the preceding claims,
**characterized in that**
the application is
- an e-mail program,
- an information manager or
- a program of the terminal which allows interaction with the server of a message signalling service.

6. The method according to one of the preceding claims,
**characterized in that**
the message signalling service is an e-mail push service.

7. The method according to one of the preceding claims,
**characterized in that**
the e-mails are with or without an e-mail attachment.

8. The method according to one of the preceding claims,
**characterized in that**
the messages are
- messages sent by Short Message Service (SMS) or
- by Multimedia Message Service (MMS).

9. The method according to one of the preceding claims,
**characterized in that**
the data management request is sent across a wireless communication link.

10. The method according to claim 9,
**characterized in that**
mobile phone technology is used to transmit the data management request.

11. The method according to claim 10,
**characterized in that**
- Global System for Mobile Communications (GSM),
- General Packet Radio Service (GPRS),
- Code Division Multiple Access (CDMA) or
- Universal Mobile Telecommunications System (UMTS) is the mobile phone technology used.

12. The method according to one of the preceding claims,
**characterized in that**
data are transferred between the server of a message signalling service and the terminal via a communication link that can be used for the message signalling service.

13. The method according to claim 12,
**characterized in that**
the Mobile Data Service (MDS) is used for transferring data between the server of a message signalling service and the terminal.

14. The method according to one of the preceding claims,
**characterized in that**
the stored data are
- e-mails with or without an attachment,
- messages with or without an attachment or
- attachments separate from the e-mail or message.

15. The method according to one of the preceding claims,
**characterized in that**
data to be managed are transferred as e-mails or by ftp to the file server, at least on particular sections of the transmission channel.

16. An arrangement for managing data, comprising
- at least one terminal, on which an application with at least one data management function is installed, wherein the data management function is realized as a button or menu item of a "Save As" function integrated in the application and wherein the data management function allows access from the terminal to a directory in the file system for selection of a storage location for the data,
- at least one mail server and/or
- at least one server of a message signalling service,
wherein the data are stored as an e-mail or as messages or as an attachment to an e-mail or message on the mail server and/or the server of a message signalling service and the arrangement is configured such that data management is made possible by
sending a data management request to a computer program from the terminal using the button or menu item,
transmitting the data according to the request from the mail server and/or the server of a message signalling service to a file server and
storing them there as a file at the storage location in a file system.

17. A computer program which enables a computer to implement a method for data management, once it has been loaded into the computer memory, wherein the data are stored as an e-mail or as messages or an attachment to an e-mail or message on a mail server and/or a server of a message signalling service, at least one application with at least one data management function is installed on a terminal, wherein the data management function is realized as a button or menu item of a "Save As" function integrated in the application and wherein the data management function allows access from the terminal to a directory in the file system for selection of a storage location for the data,
a data management request is sent to a computer program from the terminal using the button or menu item,
the data according to the request are transferred from the mail server and/or the server of a message signalling service to a file server and
stored there as a file at a storage location in a file system.

18. A computer-readable storage medium on which a program is stored, which enables a computer to implement a method for data management, once it has been loaded into the computer memory, wherein the data are stored as an e-mail or as messages or as an attachment to an e-mail or message on a mail server and/or a server of a message signalling service,
at least one application with at least one data management function is installed on a terminal, wherein the data management function is realized as a button or menu item of a "Save As" function integrated in the application and wherein the data management function allows access from the terminal to a directory in the file system for selection of a storage location for the data,
a data management request is sent to a computer program from the terminal using the button or menu item,
the data according to the request are transferred from the mail server and/or the server of a message signalling service to a file server and
stored there as a file at a storage location in a file system.

19. A method in which a computer program according to claim 17 is downloaded from an electronic data network, such as the Internet, for example, onto a data processing facility linked to the data network.

## Revendications

1. Procédé pour gérer des données, les données étant déposées en tant que courrier électronique ou messages ou pièce-jointe d'un courrier électronique ou d'un message sur un serveur de courrier et/ou un serveur d'un service de signalisation de message,
au moins une application avec au moins une fonction pour la gestion de données étant installée sur un appareil terminal, la fonction pour la gestion de données étant réalisée en tant qu'un bouton ou point de menu d'une fonction « enregistrer sous » intégré dans l'application,
à partir de l'appareil terminal, en utilisant le bouton ou le point de menu, une requête de gestion des données étant envoyée à un programme informatique,
les données étant transmises conformément à la requête à partir du serveur de courrier et/ou du serveur d'un service de signalisation de message à un serveur de fichier et
y étant déposées en tant que fichier à un emplacement de stockage dans un système de fichier,
moyennant quoi la fonction pour la gestion des données pour la sélection de l'emplacement de stockage autorise, à partir de l'appareil terminal, un accès à un répertoire dans le système de fichier.

2. Procédé selon la revendication 1, **caractérisé en ce que** l'appareil terminal est un appareil terminal mobile.

3. Procédé selon la revendication 1 ou 2, **caractérisé en ce que** l'appareil terminal est un appareil terminal permettant une coopération avec le serveur d'un service de signalisation de message.

4. Procédé selon l'une des revendications précédentes, **caractérisé en ce que** l'emplacement de stockage est prescrit grâce à une saisie de l'utilisateur dans l'appareil terminal.

5. Procédé selon l'une des revendications précédentes, caractérisé qu'en ce que ce qui concerne l'application, il s'agit
- d'un programme de messagerie électronique,
- d'un gestionnaire d'informations ou
- d'un programme de l'appareil terminal, lequel permet une coopération avec le serveur d'un service de signalisation de message.

6. Procédé selon l'une des revendications précédentes, caractérisé qu'en ce que ce qui concerne le service de signalisation de message, il s'agit d'un service de push e-mail.

7. Procédé selon l'une des revendications précédentes, **caractérisé en ce qu'**il s'agit de courriers électroniques avec ou sans pièce-jointe de courrier électronique.

8. Procédé selon l'une des revendications précédentes, caractérisé qu'en ce qui concerne les messages, il s'agit de
- messages envoyés à l'aide d'un Short Message Service (SMS) ou
- de messages envoyés à l'aide d'un Multimedia Message Service (MMS).

9. Procédé selon l'une des revendications précédentes, **caractérisé en ce que** la requête de gestion de données est envoyée via une liaison de communication sans fil.

10. Procédé selon la revendication 9, **caractérisé en ce que** pour la transmission de la requête de gestion de données, on utilise une technologie de radiocommunication mobile.

11. Procédé selon la revendication 10, **caractérisé en ce qu'**en guise de technologie de radiocommunication mobile, on utilise
- Global System for Mobile Communications (GSM),
- General Packet Radio Service (GPRS),
- Code Division Multiple Access (CDMA) ou
- Universal Mobile Telecommunications System (UMTS).

12. Procédé selon l'une des revendications précédentes, **caractérisé en ce que** des données sont transmises entre le serveur d'un service de signalisation de message et l'appareil terminal via une liaison de communication utilisable pour le service de signalisation de message.

13. Procédé selon la revendication 12, **caractérisé en ce que**, pour la transmission de données entre le serveur d'un service de signalisation de message et l'appareil terminal, on utilise Mobile Data Service (MDS).

14. Procédé selon l'une des revendications précédentes, caractérisé qu'en ce qui concerne les données enregistrées, il s'agit
- de courriers électroniques avec ou sans pièce-jointe,
- de messages avec ou sans pièce-jointe, ou
- de pièces-jointes distinctes d'un courrier électronique ou d'un message.

15. Procédé selon l'une des revendications précédentes, **caractérisé en ce que** des données à gérer sont tranmises, au moins sur des tronçons individuels du trajet de transmission, en tant que courrier électronique ou via ftp, au serveur de fichier.

16. Dispositif pour gérer des données, comprenant
- au moins un appareil terminal sur lequel est installé une application avec au moins une fonction pour la gestion de données, la fonction pour la gestion de données étant réalisée en tant qu'un bouton ou point de menu d'une fonction « enregistrer sous » intégré dans l'application et la fonction pour la gestion de données autorisant l'accès à un répertoire dans le système de fichier à partir de l'appareil terminal pour la sélection d'un emplacement de stockage pour les données,
- au moins un serveur de courrier et/ou
- au moins un serveur d'un service de signalisation de message,
les données étant déposées en tant que courrier électronique ou messages ou pièce-jointe d'un courrier électronique ou d'un message sur un serveur de courrier et/ou un serveur d'un service de signalisation de message, et le dispositif étant étudié de manière à ce qu'une gestion de données devienne possible en ce que
l'on envoie, en utilisant un bouton ou un point de menu, une requête de gestion des données à partir de l'appareil terminal à un programme informatique,
les données étant transmises conformément à la requête par le serveur de courrier et/ou le serveur d'un service de signalisation de message à un serveur de fichier et
y étant enregistrées en tant que fichier à l'emplacement de stockage dans un système de fichier.

17. Programme informatique, lequel permet à un ordinateur, après avoir été chargé dans la mémoire de l'ordinateur, d'exécuter un procédé pour la gestion de données, moyennant quoi les données sont déposées en tant que courrier électronique ou messages ou pièce jointe d'un courrier électronique ou message sur un serveur de courrier et/ou un serveur d'un service de signalisation de message, au moins une application avec au moins une fonction pour la gestion de données étant installée sur un appareil terminal, la fonction pour la gestion de données étant réalisée en tant qu'un bouton ou point de menu d'une fonction « enregistrer sous » intégré dans l'application et la fonction pour la gestion de données autorisant un accès à un répertoire dans le système de fichier à partir de l'appareil terminal pour la sélection d'un emplacement de stockage pour les données,
à partir de l'appareil terminal, en utilisant le bouton ou le point de menu, une requête pour la gestion des données étant envoyée à un programme informatique,
les données étant retransmises, conformément à la requête du serveur de courrier et/ou du serveur d'un service de signalisation de message, à un serveur de fichier et
y étant enregistrées en tant que fichier à l'emplacement de stockage dans un système de fichier.

18. Support de stockage lisible sur un ordinateur, sur lequel est stocké un programme permettant à un ordinateur, une fois qu'il a été chargé dans la mémoire de l'ordinateur, d'exécuter un procédé pour gérer des données, moyennant quoi les données sont déposées en tant que courrier électronique ou messages ou pièce-jointe d'un courrier électronique ou d'un message sur un serveur de courrier et/ou un serveur d'un service de signalisation de message,
au moins une application avec au moins une fonction pour la gestion de données étant installée sur un appareil terminal, la fonction pour la gestion de données étant réalisée en tant que bouton ou point de menu d'une fonction « enregistrer sous » intégré dans l'application et la fonction pour la gestion de données autorisant, à partir de l'appareil terminal, un accès à un répertoire dans le système de fichier pour la sélection d'un emplacement de stockage pour les données,
à partir de l'appareil terminal, en utilisant le bouton ou le point de menu, une requête de gestion des données étant envoyée à un programme informatique,
les données étant transmises, conformément à la requête à partir du serveur de courrier et/ou du serveur d'un service de signalisation de message, à un serveur de fichier et
y étant déposées en tant que fichier à l'emplacement de stockage dans un système de fichier.

19. Procédé, dans lequel un programme informatique selon la revendication 17 est téléchargé à partir d'un réseau de données électronique, tel que par exemple Internet, sur un dispositif de traitement de données raccordé au réseau de données.
